(19) **Europäisches Patentamt / European Patent Office / Office européen des brevets**

(11) **EP 4 354 949 B1**

(12) **FASCICULE DE BREVET EUROPEEN**

(45) Date de publication et mention de la délivrance du brevet:
**16.04.2025   Bulletin 2025/16**

(21) Numéro de dépôt: **23202765.6**

(22) Date de dépôt: **10.10.2023**

(51) Classification Internationale des Brevets (IPC):
**H04W 28/02** *(2009.01)*      **H04W 16/18** *(2009.01)*
**H04W 24/02** *(2009.01)*      H04W 24/08 *(2009.01)*
**H04W 24/10** *(2009.01)*

(52) Classification Coopérative des Brevets (CPC):
**H04W 24/02; H04W 16/18; H04W 28/0268;**
H04W 24/08; H04W 24/10

(54) **MÉTHODE DE GESTION DE RESSOURCES RADIO DANS UN RÉSEAU CELLULAIRE AU MOYEN D'UNE CARTOGRAPHIE HYBRIDE DE CARACTÉRISTIQUES RADIO**

VERFAHREN ZUR VERWALTUNG VON FUNK-RESSOURCEN IN EINEM MOBILEN NETZWERK MITTELS HYBRID-KARTIERUNG VON FUNK-EIGENSCHAFTEN

METHOD FOR MANAGING RADIO RESOURCES IN A CELLULAR NETWORK USING HYBRID MAPPING OF RADIO CHARACTERISTICS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **11.10.2022   FR 2210430**

(43) Date de publication de la demande:
**17.04.2024   Bulletin 2024/16**

(73) Titulaire: **Commissariat à l'Energie Atomique et aux Energies Alternatives
75015 Paris (FR)**

(72) Inventeur: **SANA, Mohamed
38054 Grenoble Cedex 09 (FR)**

(74) Mandataire: **Brevalex
Tour Trinity
1 B Place de la Défense
92400 Courbevoie (FR)**

(56) Documents cités:
**WO-A1-2012/072445      WO-A1-2018/068857
WO-A1-2019/211134      WO-A1-2020/068127
US-A1- 2019 116 560      US-A1- 2021 345 132**

**Description**

**DOMAINE TECHNIQUE**

La présente invention concerne le domaine des réseaux cellulaires et plus particulièrement la gestion de ressources radio ou RRM (*Radio Resource Management*) dans un tel réseau. Elle concerne également le domaine de l'intelligence artificielle et plus particulièrement celui de l'apprentissage distribué (*Distributed Learning).*

**ÉTAT DE LA TECHNIQUE ANTÉRIEURE**

Avec le déploiement de réseaux cellulaires de $5^{\text{ème}}$ génération (5G), les techniques de gestion de ressources radio ont dû évoluer pour prendre en compte de nouveaux cas d'usage faisant appel à des services fortement hétérogènes en termes de qualité de service (QoS). En outre, la plupart des réseaux 5G sont eux-mêmes hétérogènes par nature, ceux-ci faisant généralement appel à une superposition d'une couche dense de petites cellules ou SBS (*Small cell Base Stations)* opérant notamment dans la bande millimétrique, destinées à assurer une couverture à faible distance et débit élevé, et d'une couche peu dense de macrocellules ou MBS (*Macro cell Base Stations),* opérant dans la bande sub-6 GHz, destinée à assurer une couverture continue. Cette hétérogénéité conduit à une plus grande complexité de la gestion des ressources radio ou RRM.

La gestion des ressources radio est généralement effectuée en maximisant ou en minimisant une fonction-objectif donnée. Ainsi, selon la stratégie envisagée, on pourra, par exemple, maximiser la qualité de service (QoS) de certaines communications du réseau, minimiser la fréquence des opérations de handover, minimiser la latence de certaines communications, ou encore minimiser la consommation énergétique des terminaux mobiles et/ou des stations de base. La gestion des ressources intervient à différents niveaux dans le réseau, par exemple dans l'allocation de ressources de transmission (intervalles de temps, fréquences, codes), l'association des terminaux d'utilisateurs (UEs) aux stations de base, l'attribution/ la configuration de faisceaux, l'allocation de puissance, le mécanisme de handover, le déploiement dynamique de stations de base ou de relais, la localisation de terminal, etc.

Pour des raisons de simplicité, de flexibilité et de scalabilité, les méthodes de gestion de ressources radio font généralement appel à une cartographie de caractéristiques radio représentant les conditions de propagation et/ou l'activité spectrale dans différentes sous-bandes, en différents points de la zone géographique dans laquelle est déployée le réseau. Ces caractéristiques radio sont classiquement obtenues à partir des informations d'état du canal ou CSI (*Channel State Information*) collectées par les différents terminaux d'utilisateurs en différents points, à différentes fréquences et différentes époques. Les caractéristiques radio ainsi cartographiées permettent alors d'estimer les niveaux d'interférence, les propriétés des canaux de propagation ainsi que la topologie du réseau.

Différentes cartographies de caractéristiques radio, plus simplement dénommées cartographies radio, sont connues de l'état de la technique.

Par exemple, une cartographie de puissance de signal reçu ou RSS (*Received Signal Strength*) d'une pluralité de points d'accès (ou, réciproquement la puissance de signal reçue en provenance d'une source par une pluralité de récepteurs) est classiquement utilisée dans des méthodes de localisation par empreintes radio (*radio fingerprinting*). Un exemple d'application de cartographie RSS pour déployer dynamiquement des relais dans un réseau est décrit dans l'article de J. Chen intitulé « Learning radio maps UAV-aided wireless networks : a segmented regression approach » publié dans Proc. of IEEE Int'l Conf. on Communications, mai 2017, pp. 1-6.

L'article de S. Bi et al. intitulé « Engineering radio map for wireless resource management » publié dans IEEE Wireless Communications, Février 2019, propose de générer une cartographie de puissance de densité spectrale ou PSD (*Power Spectral Density*) par superposition de cartographies locales obtenues en différents points d'émission. Cette méthode de cartographie nécessite cependant de disposer d'un grand nombre de nœuds pour obtenir une cartographie précise de la PSD.

Enfin, l'article de C. Studer et al. intitulé « Channel charting : locating users within the radio environment using channel state information » publié dans IEEE Access, vol. 4, 2016, pp. 1-17 décrit une méthode d'apprentissage non supervisée d'une cartographie radio (ici une cartographie de caractéristiques de canal), à partir d'une acquisition des informations CSI collectées par les différents terminaux. La cartographie de caractéristiques de canal est apprise dans un espace de représentation (*embedding*) de dimension réduite ( $\mathbb{R}^{D'}$ ) par rapport à l'espace géométrique ( $\mathbb{R}^{D}$ ), tout en préservant les relations géométriques locales. Plus précisément, des points physiquement proches dans l'espace géométrique sont transformés en des points voisins dans l'espace de représentation (contrainte de continuité). La cartographie de caractéristiques de canal dans l'espace de représentation peut ensuite être utilisée par une station de base pour prendre les décisions de handover.

Toutefois la cartographie de caractéristiques de canal proposée dans cet article ne contient qu'une information relativement pauvre. Ainsi, elle ne peut être utilisée de manière satisfaisante pour la gestion des ressources radio du réseau. En outre, la contrainte de continuité précitée peut s'avérer inappropriée dans certains cas. En effet, des terminaux mobiles situés à proximité l'un de l'autre peuvent présenter des caractéristiques de canal radicalement différentes alors qu'*a contrario* des terminaux mobiles distants peuvent posséder des caractéristiques de canal relativement similaires. Qui plus est, la génération de cartographie de ces caractéristiques est généralement réalisée de manière centralisée, par exemple au sein d'un serveur de calcul, ce qui, d'une part, requiert l'échange d'un grand nombre de messages de mesures au sein du réseau et réduit d'autant le débit utile des communications, et, d'autre part, ne permet pas de suivre de manière efficace les variations locales de caractéristiques dues à l'hétérogénéité du réseau. Enfin, la cartographie canal obtenue est spécifique à un environnement et à une bande de fréquence donnés : un changement d'environnement ou de gamme de fréquences (par exemple de la bande sub-6 GHz à la bande millimétrique ou réciproquement) nécessite par conséquent de lancer une nouvelle campagne complète d'apprentissage.

Le document de brevet WO 2019/211134 A1 divulgue des méthodes pour gérer la performance d'un réseau d'accès radio. Le réseau d'accès radio comprend un ou plusieurs nœuds de réseau radio. Un premier nœud de réseau détermine une configuration d'un ou plusieurs paramètres dans le réseau d'accès radio. La détermination est basée sur une ou plusieurs procédures d'apprentissage par renforcement mises en œuvre par machine pour optimiser les performances du réseau d'accès radio sur la base du ou des paramètres.

Le document de brevet WO 2020/068127 A1 divulgue des méthodes d'utilisation de l'apprentissage automatique pour améliorer les communications entre différents réseaux.

Le document de brevet WO 2012/072445 A1 divulgue des exemples de systèmes d'apprentissage et d'optimisation de réseaux pour faciliter l'adaptation à l'état du système.

L'objet de la présente invention est par conséquent de proposer une méthode de gestion de ressources radio basée sur une cartographie radio enrichie (ou augmentée), qui puisse facilement prendre en compte l'hétérogénéité du réseau sans recourir à des infrastructures de calcul importantes ni pénaliser le débit utile des communications, et qui ne nécessite pas de nouvelle phase complète d'apprentissage en cas de changement d'environnement ou de topologie du réseau.

## EXPOSÉ DE L'INVENTION

La présente invention est définie par une méthode selon la revendication 1.

Avantageusement, la récompense à maximiser correspond à une somme de débits ou de niveaux de qualité de service sur des communications du réseau à maximiser, ou bien une fréquence de handover ou une consommation énergétique à minimiser.

Le voisinage du point d'intérêt peut être défini comme un ensemble de points voisins du réseau au sens d'une métrique de similarité opérant dans un espace de représentation des observations locales.

Alternativement, ledit voisinage du point d'intérêt est déterminé au moyen d'un classificateur préalablement entraîné, opérant dans un espace de représentation des observations locales.

Avantageusement, le nœud d'intérêt ne décide d'effectuer une action à un instant que dans la mesure où l'une des cartographies locales d'une caractéristique radio à cet instant diffère de la cartographie locale de la même caractéristique radio à l'instant précédent, la différence entre les deux cartographies locales étant mesurées à l'aide d'une divergence de Kullback-Leibler.

Alternativement, le nœud d'intérêt ne décide d'effectuer une action à un instant que dans la mesure où la cartographie locale hybride à cet instant diffère de la cartographie locale hybride à l'instant précédent, la différence entre les deux cartographies hybrides étant mesurée à l'aide d'une divergence de Kullback-Leibler.

La fusion des cartographies radio locales utilise avantageusement un mécanisme d'attention à $H$ têtes, avec $H < K$ où $K$ est le nombre de caractéristiques radio.

Dans ce cas, la cartographie locale hybride peut être obtenue au moyen de $\Phi_j^a(t,f) = W_\Phi \left[\alpha_j^h \phi_j^h(p,t,f); h = 1, \ldots, H\right]^T$ où $\alpha_j^h = \left(\alpha_{i,j}^h; i = 1, \ldots, P_j\right)$ est le score entre une requête $q_j^h$ du nœud $N_j$ et les clés associées aux différentes observations issues des nœuds du voisinage $V_j(t)$, du nœud d'intérêt, $\phi_j^h(p,t,f)$ est la valeur de cartographie locale de la caractéristique $h$ au point p, à l'instant $t$ et à la fréquence $f$, et $W_\Phi$ est une matrice de taille $P_j \times H$ où $P_j$ est le nombre de nœuds du voisinage $V_j(t)$.

La requête du nœud d'intérêt peut être exprimée par un vecteur $q_j^h = W_{q,j}^h o_j^T$ où $W_{q,j}^h$ est une matrice de taille $n \times \Omega$ où $n$ est la dimension de l'espace de représentation des caractéristiques et $\Omega$ est la taille des vecteurs d'observation et les clés associées aux différentes observations issues des nœuds $N_i$ de $V_j(t)$ peuvent être exprimées par les vecteurs $k_{i,j}^h = W_{k,j}^h o_j^T$ .

Enfin, le score entre la requête $q_j^h$ du nœud $N_j$ et une clé associée à un nœud $N_i$ du voisinage $V_j(t)$ peut être

calculé au moyen de $\alpha_{i,j}^h = softmax\left(\frac{q_j^h . k_{i,j}^h}{\sqrt{n}}\right)$ où « . » représente le produit scalaire.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

[Fig. 1] représente de manière schématique un service de passage de messages entre nœuds d'un même voisinage au sein du réseau, utilisé dans le cadre de la présente invention ;
[Fig. 2] illustre de manière schématique un exemple de combinaison de cartographies de caractéristiques locales radio pouvant être utilisé dans la méthode de gestion de ressources radio selon la présente invention ;
[Fig. 3] représente de manière schématique l'architecture d'un nœud du réseau permettant de mettre en œuvre une méthode de gestion de ressources radio selon un mode de réalisation de la présente invention ;
[Fig. 4] représente de manière schématique un ordinogramme de la méthode de gestion de ressources radio selon un mode de réalisation de la présente invention ;
[Fig. 5] détaille l'étape de détermination du voisinage d'un nœud dans l'ordinogramme de la Fig. 4.

## EXPOSÉ DÉTAILLÉ DE MODES DE RÉALISATION PARTICULIERS

On considérera dans la suite un réseau cellulaire composé d'une pluralité de stations de base. Sans perte de généralité et à titre d'illustration seulement, nous supposerons que ce réseau cellulaire est hétérogène. Par réseau cellulaire hétérogène nous entendons un réseau résultant de la superposition d'une couche de petites cellules (SBS) de faible couverture, mais potentiellement capable d'offrir à chaque UE un débit élevé, et d'une couche de macro-cellules (MBS), garantissant la continuité de la couverture du réseau en offrant une plus grande portée. Un exemple typique d'application est celui d'un réseau 5G dans lequel les cellules SBS opèrent dans la bande millimétrique et les cellules MBS opèrent dans la bande sub-6 GHz. L'homme du métier comprendra toutefois que la méthode d'association selon la présente invention s'applique à un réseau cellulaire quelconque, qu'il soit homogène ou hétérogène.

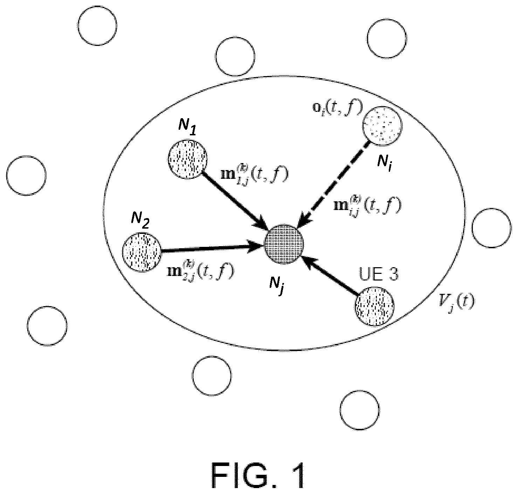

Une idée à la base de la présente invention est d'effectuer un apprentissage d'une politique de gestion de ressource radio à partir d'une cartographie locale hybride d'une pluralité de caractéristiques radio. Cette cartographie est obtenue de manière distribuée et non plus centralisée comme dans l'état de la technique. Pour ce faire, la présente invention utilise un service de passage de messages entre nœuds voisins, tel qu'illustré en Fig. 1.

Les nœuds du réseau, notés $N_i$, $i = 1,..,P$ peuvent être des terminaux d'utilisateurs (UE), des stations de base (BS) ou encore des relais. On a représenté en Fig. 1 les nœuds appartenant au voisinage $V_j(t)$, d'un nœud d'intérêt $N_j$, par exemple un terminal d'utilisateur, ledit voisinage étant obtenu au moyen d'une métrique de similarité décrite plus loin. Comme la notation l'indique, le voisinage $V_j(t)$ dépend du temps $t$ dans la mesure où l'environnement du nœud $N_j$ peut varier, soit que celui-ci se déplace dans le réseau, soit que des nœuds sortent ou entrent dans la zone où se trouve $N_j$, soit encore en raison de l'évolution de l'environnement de propagation lui-même (par exemple mouvement d'un obstacle à la propagation), soit encore en raison d'une combinaison de ces différentes causes, ce de manière non limitative.

Chaque nœud appartenant au voisinage de $N_j$, soit $N_i \in V_j(t)$, effectue une observation locale, notée $o_i(t, f)$, de son environnement radio sous la forme d'une mesure d'au moins un paramètre ou signal radio.

De manière générale, une telle observation locale peut se présenter sous une forme vectorielle, par exemple un vecteur ligne $o_i(t, f)$, chaque élément du vecteur d'observation correspondant à la mesure d'un paramètre ou d'un signal radio, et peut dépendre de l'instant, $t$, et de la fréquence, $f$, à laquelle (voire de la bande de fréquence dans laquelle) elle est réalisée. Cette observation locale peut comprendre une mesure de signal reçu RSS, un angle d'arrivée d'un signal reçu, un angle de départ d'un signal émis, une estimation de canal ou de manière équivalente, une information d'état de canal CSI, une estimation de qualité de service QoS, un niveau d'interférence, une classe de mobilité (dans un système 5G) ou une requête en densité de trafic (dans un système 5G).

On supposera dans la suite que chaque nœud est capable d'extraire $K$ caractéristiques radio de ses observations locales. Ces caractéristiques radio peuvent être relatives par exemple à la topologie du réseau, au niveau d'interférence, à la densité de trafic etc. Ces caractéristiques radio sont codées sous forme de messages qui sont transmis aux nœud $N_j$. Plus précisément, dans le cas de la Fig. 1, chaque nœud $N_i \in V_j(t)$ effectuant une observation

locale, $\mathbf{o}_i(t, f)$, en extrait des caractéristiques radio $k = 1,...,K$ et les code chacune d'entre elle sous la forme d'un message $\boldsymbol{m}_{i,j}^k(t,f)$ qu'il transmet au nœud $N_j$, soit :

[Math. 1]

$$\mathbf{m}_{i,j}^k(t, f) = g_j^k\left(\mathbf{o}_i(t, f)\right) \tag{1}$$

La fonction de codage $g_j^k(.)$ dépend en règle générale du nœud $N_j$ dont on considère le voisinage et de la caractéristique radio envisagée. Elle peut être vue comme une fonction de pré-filtrage relative à la caractéristique $k$ ayant pour objet d'extraire de l'observation locale $\mathbf{o}_i(t, f)$ une information relative à cette caractéristique. Cette fonction de codage peut prendre différentes formes selon le type d'observation et le type de caractéristique envisagés. Par exemple, elle peut être définie par une opération d'association (*clustering*), une projection sur une variété géométrique, notamment sur une variété affine relative à la caractéristique en question, une multiplication par une matrice de filtrage, une table de mapping, un réseau de neurones.

Le nœud d'intérêt $N_j$ agrège les messages relatifs à une même caractéristique $k$, reçus de ses voisins et calcule la valeur prise par une variable cartographique locale représentant cette caractéristique, en une pluralité de positions $p = 1,...,P_j(t)$ avec $P_j(t) = Card(V_j(t))$, à l'instant $t$ et à la fréquence $f$, soit :

[Math.2]

$$\phi_j^k(p, t, f) = \sigma_k\left\{\mathbf{m}_{i,j}^k(t, f), \forall i \in V_j(t)\right\} \tag{2}$$

où $\sigma_k\{.\}$ est une fonction d'agrégation, invariante par permutation des indices $i$ (l'ordre des nœuds dans le voisinage étant sans importance) et scalable, dans la mesure où la fonction d'agrégation doit être indépendante du nombre de nœuds dans le voisinage $V_j(t)$. Dans la suite pour des raisons de simplification, nous adopterons la notation $P_j$ en lieu et place de $P_j(t)$, étant bien compris que le nombre de nœuds voisins du nœud d'intérêt $N_j$ dépend généralement du temps. L'ensemble des valeurs $\phi_j^k(p, t, f)$ pour les différentes positions $p = 1,...,P_j$ donne une cartographie locale (*local feature map*), $\Phi_j^k(t, f)$ de la caractéristique $k$ à l'instant $t$ et la fréquence $f$, dans le voisinage $V_j(t)$, où $\Phi_j^k(t, f)$ est un vecteur de taille $P_j(t) = Card(V_j(t))$. De manière plus générale, les valeurs $\phi_j^k(p, t, f)$ ne sont pas nécessairement des scalaires mais des vecteurs de dimension $n$ ($n$ étant la dimension de l'espace de représentation des caractéristiques radio), la cartographie étant alors définie par une matrice $\Phi_j^k(t, f)$ de taille $P_j \times n$. Le cas échéant, on pourra prévoir une taille de matrice $\Pi \times n$ indépendante du nœud d'intérêt considéré, $\Pi \geq P_j$ avec la matrice étant alors creuse (*sparse*) ou bien présentant des valeurs interpolées pour les points ne correspondant pas à des positions de nœuds du voisinage. Dans la suite, nous supposerons cependant, sans perte de généralité, que les matrices $\Phi_j^k(t, f)$ sont de taille $P_j \times n$.

La fonction d'agrégation $\sigma_k(.)$ des différents messages peut être, par exemple, une concaténation, une opération de max-pooling, une somme de projections, voire un mécanisme d'auto-attention (*self attention*) tel que défini dans l'article de A. Vaswani et al. intitulé « Attention is all you need », publié dans Proceedings of NIPS 2017, 6.12.2017.

Le cas échéant, les opérations de codage et de combinaison pourront être réalisées de manière conjointe dans un réseau de neurones en graphe ou GNN (Graph Neural Network), tel que décrit dans l'article de J. Zhou et al. intitulé « Graph neural networks : a review of methods and applications » publié dans AI Open, vol. 1, pp. 57-81, par exemple dans un réseau d'attention en graphe. Dans un tel cas, les nœuds du graphe sont des nœuds du réseau cellulaire, chaque nœud disposant d'une information correspondant à son observation locale $\mathbf{o}_i(t, f)$ et les arêtes du graphe représentent les messages échangés $\boldsymbol{m}_{i,j}^k(t,f)$.

Les cartographies locales $\boldsymbol{\Phi}_j^k(t, f)$ des différentes caractéristiques, $k = 1,..,K$, sont ensuite fusionnées pour obtenir une cartographie locale hybride de ces caractéristiques, dite encore cartographie augmentée, $\boldsymbol{\Phi}_j^a(t,f)$. La manière dont la fusion est réalisée dépend de la fonction-objectif à optimiser (à maximiser ou à minimiser) pour une politique donnée de gestion de ressources radio. Par exemple, il pourra s'agir de maximiser une somme de débits (sur différentes communications), de maximiser une qualité de service, de réduire la fréquence de handover, de réduire la consommation d'énergie dans un scénario de calcul en périphérie de réseau ou MEC (Mobile Edge Computing).

Selon un premier exemple de réalisation, la fusion peut être obtenue au moyen d'une simple somme, voire d'une somme pondérée. Autrement dit :

[Math.3]

$$\boldsymbol{\Phi}_j^a(t,f) = \sum_{k=1}^{K} a_j^k \boldsymbol{\Phi}_j^k(t,f) \qquad (3)$$

où $a_j^k$, $k = 1,..,K$ sont des réels strictement positifs. Cela suppose dans ce cas, que toutes les matrices $\boldsymbol{\Phi}_j^k(t,f)$ soient de même taille $\Pi \times n$.

Selon un second exemple de réalisation, la cartographie augmentée peut être obtenue au moyen d'une somme de produits matriciels :

[Math.4]

$$\boldsymbol{\Phi}_j^a(t,f) = \sum_{k=1}^{K} \mathbf{A}_j^k \boldsymbol{\Phi}_j^k(t,f) \qquad (4)$$

où $A_j^k$, $k = 1,..,K$ sont des matrices de taille $\Pi \times P_j$.

Selon un troisième exemple de réalisation, la cartographie augmentée est obtenue au moyen d'un mécanisme d'attention. On rappelle qu'un mécanisme d'attention vise, de manière schématique, à rechercher dans une séquence d'entrées, celles (ici les caractéristiques radio) qui présentent une certaine connexion ou corrélation pour prédire au mieux une sortie. Un mécanisme d'attention (cf. article de Vaswani *et al.* précité) met en œuvre un vecteur de requête (*query*), un vecteur de clé (*key*) et un vecteur de valeur (*value*). Pour une requête donnée et pour chaque clé associée à une valeur, on calcule un score d'attention qui représente le degré de pertinence de cette clé pour la requête, le résultat de la requête étant alors la pondération des différentes valeurs par des poids représentatifs des scores associés.

Dans le cas présent, une requête du nœud $N_j$ est formée pour chaque caractéristique *h* parmi $H < K$ caractéristiques au moyen de :

[Math.5]

$$\mathbf{q}_j^h = \mathbf{W}_{q,j}^h \mathbf{o}_j^T \qquad (5)$$

où $W_{q,j}^h$ est une matrice de taille $n \times \Omega$ où $n$ est la dimension de l'espace de représentation des caractéristiques et $\Omega$ est la taille des vecteurs d'observation.

Plus précisément, la cartographie locale augmentée est alors obtenue par :

[Math.6]

$$\boldsymbol{\Phi}_j^a(t,f) = \mathbf{W}_\Phi \cdot \left[ \boldsymbol{\alpha}_j^h \boldsymbol{\phi}_j^h\left(p,t,f\right); h = 1,...,H \right]^T \qquad (6)$$

où $\boldsymbol{\alpha}_j^h = \left(\alpha_{i,j}^h; i = 1,..,P_j\right)$ est le score entre la requête $q_j^h$ du nœud $N_j$ et les clés associées aux différentes observations issues des nœuds de $V_j(t)$, à savoir :

[Math.7]

$$\alpha_{i,j}^{h} = \mathrm{softmax}\left(\frac{\mathbf{q}_j^h . \mathbf{k}_{i,j}^h}{\sqrt{n}}\right) \qquad (7)$$

$$k_{i,j}^h = W_{k,j}^h o_j^T$$

où $\qquad$ est le vecteur de clé associé aux différentes observations issues des nœuds de $V_j(t)$ et $.$ représente le produit scalaire ;

$$\phi_j^h(p,t,f) = \left[v_{i,j}^h(t,f); i = 1,..,P_j\right]^T$$ est une matrice de taille $P_j \times n$ où $\quad v_{i,j}^h(t,f) = W_{v,j}^h o_j^T$ est le vecteur de valeur associé à ces mêmes observations ;

$W_\Phi$ est une matrice de taille $P_j \times H$ où $H$ est le nombre de têtes d'attention, $\left[\alpha_j^h \phi_j^h(p,t,f); h = 1,\ldots,H\right]$ est une matrice de taille $n \times H$ et par conséquent la cartographie $\Phi_j^a(t,f)$ est une matrice de taille $P_j \times n$.

Les coefficients $a_j^k$ dans le premier exemple de réalisation, les matrices $A_j^k$ dans le second exemple de réalisation, ainsi que les matrices $W_{q,j}^h, W_{k,j}^h, W_{v,j}^h$ , $W_\Phi$ intervenant dans le troisième exemple de réalisation, collectivement dénommés paramètres de fusion, sont avantageusement déterminés au moyen d'un apprentissage par renforcement comme décrit plus loin.

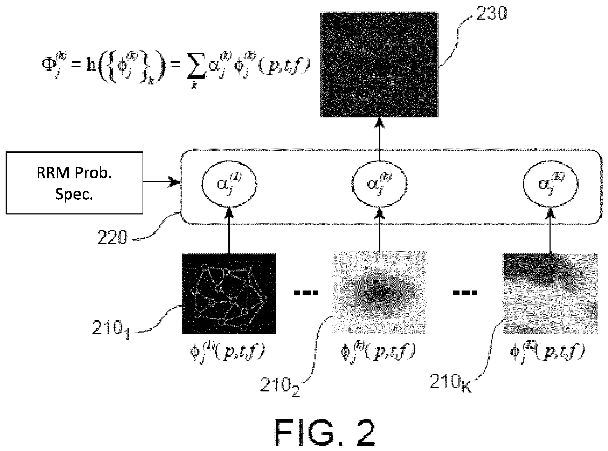

La Fig. 2 représente de manière schématique une combinaison de cartographies locales radio selon le premier exemple de réalisation précité.

On a représenté en $210_1$, $210_2$,...,$210_K$ les cartographies locales radio obtenues par le nœud $N_j$ à partir des messages reçus de ses nœuds voisins. Par exemple, la cartographie $210_1$ peut donner la topologie locale du réseau, la cartographie $210_2$ peut donner une information de RSS de signal reçu de $N_j$, etc.

Ces cartographies sont pondérées au moyen de coefficients de pondération $a_j^k$ qui auront été préalablement déterminés dans une phase d'apprentissage, cet apprentissage dépendant de la fonction-objectif, puis combinées en 220.

La cartographie hybride (ou augmentée) 230, résultant de la combinaison des différentes cartographies de caractéristiques radio, est utilisée pour prendre des décisions de gestion de ressources radio.

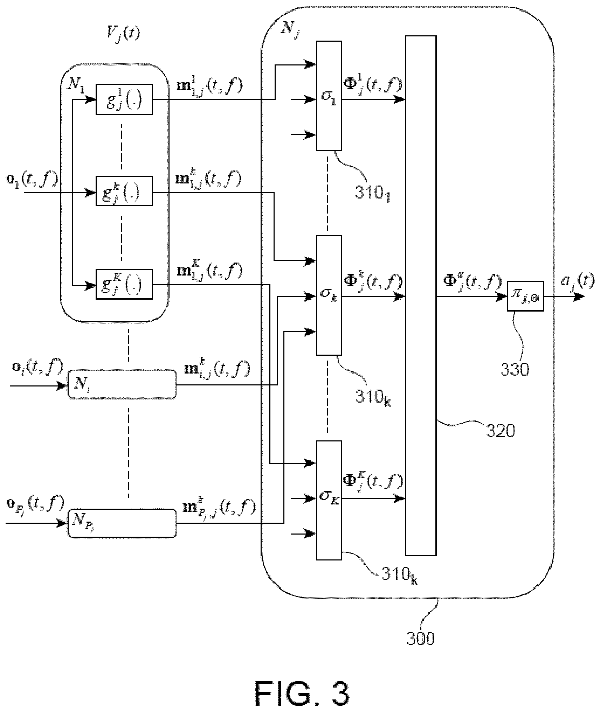

La Fig. 3 représente de manière schématique l'architecture d'un nœud du réseau permettant de mettre en œuvre une méthode de gestion de ressources radio selon un mode de réalisation de la présente invention.

Le nœud considéré, 300, est le nœud d'intérêt $N_j$ de la Fig. 1. On rappelle que chaque nœud $N_i$, $i \neq j$, du voisinage $V_j(t)$ effectue une observation $o_i(t,f)$ de son environnement, en extrait une information relative à la caractéristique radio $k$ puis transmet un message $m_{i,j}^k(t,f) = g_j^k(o_i(t,f))$ au nœud $N_j$.

Le nœud 300 possède une pluralité $K$ de modules d'agrégation $310_k$, $k = 1,...,K$ chaque module d'agrégation $310_k$ agrégeant les messages $m_{i,j}^k(t,f)$ , $i = 1,..,P_j$, reçus des nœuds de $V_j(t)$ pour générer une cartographie locale de la caractéristique radio $k$. Cette cartographie est stockée dans une mémoire locale associée (non représentée).

Les cartographies locales radio relatives aux différentes caractéristiques sont ensuite fusionnées dans le module de combinaison 320 pour fournir une cartographie locale hybride (ou augmentée) $\Phi_j^a(t,f)$ .

Le nœud 300 prend une décision relative à la gestion des ressources radio dans le module de décision 330, de manière à optimiser une fonction-objectif. Les modules de combinaison et de décision peuvent être réalisés par exemple au moyen de réseaux de neurones.

Selon un mode de réalisation, le module de décision 330 ne prend de nouvelle décision que lorsqu'une variation est intervenue dans l'une des cartographies $\Phi_j^k(t,f)$ , $k = 1,...,K$.

Les paramètres des modules de fusion et du module de décision sont déterminés par apprentissage, avantageusement au moyen d'un apprentissage par renforcement, comme décrit plus loin.

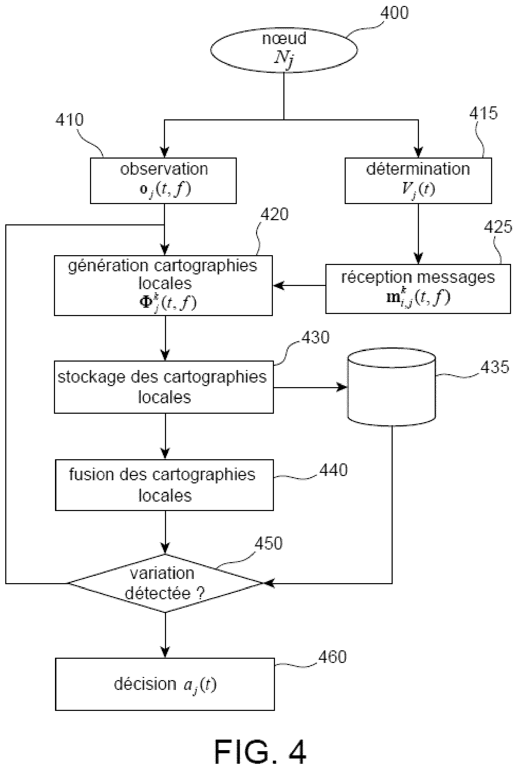

La Fig. 4 représente de manière schématique un ordinogramme de la méthode de gestion de ressources radio selon un mode de réalisation de la présente invention.

On considère à nouveau un nœud d'intérêt $N_j$ du réseau.

Ce nœud 400 effectue à l'étape 410 une observation locale de son environnement radio, $o_j(t, f)$. Il en extrait une information relative à chaque caractéristique radio $k = 1,...,K$ puis transmet les messages

$$m_{j,\ell}^k(t,f) = g_\ell^k\big(o_j(t,f)\big)$$

aux nœuds $N_\ell$ pour lesquels $N_j \in V_\ell(t)$.

En parallèle, le nœud $N_j$ détermine à l'étape 415 son voisinage $V_j(t)$ à l'instant $t$ au sens d'une métrique comme décrit plus loin, et reçoit en 425 les messages $m_{i,j}^k(t,f)$ des nœuds du réseau appartenant à ce voisinage.

Le nœud $N_j$ génère en 420 les cartographies locales $\Phi_j^k(t,f)$, $k = 1, ..., K$ des différentes caractéristiques radio et les fusionne en 440 pour obtenir la cartographie locale augmentée, $\Phi_j^a(t,f)$.

En parallèle, les cartographies locales $\Phi_j^k(t,f)$ mises à jour sont stockées en 430 dans une mémoire locale 435 du nœud, $N_j$.

Le nœud $N_j$ prend une décision de gestion des ressources radio en 460, différentes options sont possibles : Tout d'abord, une décision relative à la gestion des ressources radio peut être prise à chaque incrément temporel. Alternativement, une telle décision ne sera prise que si l'une des cartographies courantes $\Phi_j^k(t,f)$, $k = 1,...,K$ diffère de manière significative de celle générée pour la même caractéristique à l'instant précédent $\Phi_j^k(t-1,f)$, option représentée par le test 450. Alternativement encore, une telle décision ne sera prise que si la cartographie hybride courante $\Phi_j^a(t,f)$ diffère significativement de celle relative à l'instant précédent, $\Phi_j^a(t-1,f)$. Alternativement enfin, une telle décision ne sera prise que si la cartographie hybride observée sur une fenêtre temporelle donnée diffère significativement de celle observée en un instant précédant cette fenêtre. Dans tous les cas, la détection d'une variation de la cartographie pourra être obtenue à partir de la divergence K-L (divergence de Kullback-Leibler) entre deux cartographies successives. Par exemple, dans le premier cas, une variation significative sera détectée si :

[Math.8]

$$\exists k \in \{1,..,K\} \text{ tel que } D_{KL}\big(\Phi_j^k(t,f)\big\|\Phi_j^k(t-1,f)\big) > \varepsilon_{TH} \qquad (8)$$

où $D_{KL}$ est la divergence K-L et $\varepsilon_{TH}$ est un réel positif représentant un seuil de variation prédéterminé.

La politique de gestion de ressources radio suivie par le nœud $N_j$ est déterminée au moyen d'un apprentissage par renforcement. On rappelle qu'une méthode d'apprentissage par renforcement est une méthode d'apprentissage automatique dans laquelle un agent autonome, plongé dans un environnement, apprend des actions à effectuer à partir d'expériences, de manière à optimiser une récompense cumulée au cours du temps. L'agent prend des décisions en fonction de son état dans l'environnement selon un processus de décision markovien et l'environnement lui procure en retour des récompenses en fonction des actions qu'il effectue à chaque instant.

Dans le cas présent, l'agent est un nœud du réseau, en l'occurrence le nœud $N_j$, et l'état du nœud dans l'environnement $V_j(t)$ est représenté par la cartographie locale augmentée $\Phi_j^a(t,f)$. L'apprentissage a ici pour objectif de déterminer la stratégie de gestion des ressource radio $\pi_{j,\Theta}\big(a_j(t)\big|\Phi_j^a(t,f)\big)$, c'est-à-dire la probabilité pour le nœud de décider d'effectuer l'action $a_j(t) \in A$ où $A$ est l'ensemble des actions possibles lorsque la cartographie locale augmentée est $\Phi_j^a(t,f)$. L'ensemble $\Theta$ des paramètres paramétrisant la distribution de probabilité $\pi_{j,\Theta}\big(a_j(t)\big|\Phi_j^a(t,f)\big)$, ainsi que les paramètres de fusion, par exemple les matrices

$$W_{q,j}^h, W_{k,j}^h, W_{v,j}^h$$

, $W_\phi$ intervenant dans le troisième exemple de réalisation sont appris au moyen d'un apprentissage de bout en bout (*end-to-*end), c'est-à-dire concernant à la fois le module de combinaison 330 et le module de décision 340. L'apprentissage peut être réalisé, de manière connue en soi, par une méthode de gradient de stratégie (*policy gradient method*) décrite dans l'ouvrage de R.S. Sutton intitulé « Reinforcement Learning » publié par MIT Press en 2018.

La méthode de gestion de ressources radio décrite ci-dessus suppose que chaque nœud $N_j$ puisse déterminer son voisinage (cf. étape 415), et donc les nœuds qui vont participer au service de passage de messages.

Le voisinage $V_j(t)$ du nœud peut être déterminé en sélectionnant (ou en sous-échantillonnant) parmi les nœuds du réseau, ou d'un sous-ensemble de celui-ci, ceux qui satisfont à une certaine métrique $\delta$, opérant dans un espace de représentation des observations locales :

[Math.9]

$$V_j(t) = \left\{ N_i \,\middle|\, \delta\left(\mathbf{o}_i, \mathbf{o}_j\right) \le d; N_i \in U \right\} \qquad (9)$$

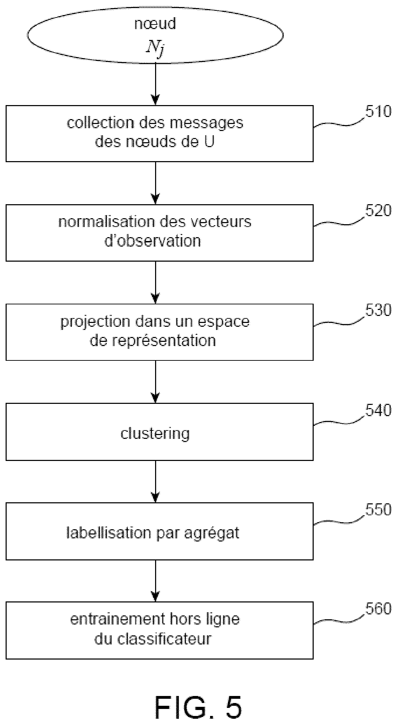

La métrique $\delta$ peut être une similarité en cosinus (*cosine similarity*) basée sur un produit scalaire de vecteurs normés. Alternativement, $\delta$ peut être considéré comme un processus de classification où $\delta(\mathbf{o}_i, \mathbf{o}_j)$ définit la probabilité que l'observation $\mathbf{o}_j$ se trouve dans la même classe que $\mathbf{o}_i$. L'opérateur de classification peut être entraîné en ligne de manière centralisée et supervisée comme indiqué en Fig. 5.

A l'étape 510, le nœud $N_j$ collecte les observations locales de l'ensemble U des nœuds du réseau ou d'un sous-ensemble constitué par exemple de ceux qui sont à la portée en réception de $N_j$. Ces observations locales sont représentées par des vecteurs $\mathbf{o}_i$.

Ces vecteurs font ensuite l'objet d'un prétraitement (par exemple une normalisation) en 520 avant d'être projetés dans un espace de représentation de dimension réduite en 530.

Un algorithme de clustering de type K-means, 540, permet alors de regrouper les nœuds sous forme d'agrégats et d'attribuer ensuite, 550, une même étiquette aux nœuds d'un même agrégat. Un classificateur peut enfin être entrainé hors ligne (*offline*) de manière supervisée sur les paires nœuds-étiquettes ainsi créées, 560.

Une fois entrainé, le classificateur peut déterminer pour un nœud donné, $N_j$, les nœuds du réseau ou d'un sous-ensemble de celui-ci qui appartiennent au même agrégat que $N_j$. Ces nœuds forment le voisinage $V_j(t)$ de $N_j$.

La méthode de gestion des ressources radio d'un réseau cellulaire à partir d'une cartographie locale augmentée en chaque nœud du réseau voire en des nœuds d'un certain type seulement (stations de base BS, SBS, MBS, relais, etc.) permet de prendre des décisions de manière distribuée en prenant en compte l'hétérogénéité de ce dernier. Qui plus est, lorsque l'ensemble des paramètres $\Theta$ a été appris pour une gamme de fréquence (par exemple sub-6 GHz), celui-ci peut être transféré à des modules de combinaison et de décision opérant dans une autre gamme de fréquence (millimétrique) pour une poursuite et une adaptation de l'apprentissage à cette autre gamme. La transférabilité des paramètres permet ainsi d'accélérer la phase d'apprentissage dans un nouvel environnement.

A titre d'illustration, nous décrirons ci-après deux exemples d'application d'une méthode de gestion de ressources radio selon la présente invention.

Le premier exemple concerne l'association d'équipements d'utilisateur (UEs) dans un réseau 5G. On rappelle qu'une méthode d'association vise à déterminer, pour chaque terminal mobile, la station de base (autrement dit la cellule) qui devra le servir, compte tenu des besoins de l'ensemble des utilisateurs (débit, rapport signal sur bruit, latence, etc.) et des contraintes relatives aux stations de base (puissance maximale d'émission, niveau d'interférence, bande passante disponible, etc.). On suppose que le réseau 5G dispose de $N_m$ petites cellules (*small cells*) équipés de stations de base SBS opérant dans la bande millimétrique et de $N_s$ macro-cellules (*macro cells*) équipés de stations de base MBS dans la bande sub-6 GHz. L'ensemble des terminaux d'utilisateurs est noté ici $U(t)$ et celui des points d'accès, de cardinal $N_m + N_s$ est noté $S$.

Chaque terminal utilisateur ou UE $N_j \in U(t)$ peut effectuer une action $a_j(t) \in A$ correspondant à une demande d'association à une station de base (SBS ou MBS). $A$ est l'ensemble des demandes d'associations possibles, correspondant ici de manière biunivoque à l'ensemble $S$ des stations de base.

Les observations des différents UEs $N_i \in V_j(t)$ sont données par les vecteurs :

[Math.10]

$$\mathbf{o}_i(t,f) = \left[ R(t-1), D_i(t), \left\{ RSS_{i,b}(t,f), AoA_{i,b}(t,f), I_{i,b}(t-1,f), QoS_{i,b}(t-1,f) \right\}_{b \in S} \right] \qquad (10)$$

où $R(t-1)$ est la capacité totale du réseau à l'instant précédent $t$-1, $D_i(t)$ est le débit requis par le terminal mobile $N_i$ à l'instant

$t$, $RSS_{i,b}(t, f)$ est la puissance du signal reçu par l'UE $N_i$ de la station de base $b \in S$ à l'instant $t$ et à la fréquence $f$, $AoA_{i,b}(t, f)$ est l'angle d'arrivée du signal reçu de cette station de base, $I_{i,b}(t-1, f)$ est le niveau d'interférence mesuré et $QoS_{i,b}(t-1, f)$ le niveau de qualité de service, tels que perçus à l'instant précédent. On notera que la capacité totale du réseau $R(t)$ n'est pas connu au moment de l'observation dans la mesure où la décision d'association de $N_j$ n'est pas encore prise, c'est donc sa valeur à l'instant précédent $t-1$ qui est prise en compte dans le vecteur d'observation. Il en va de même pour les niveaux d'interférence et de qualité de service.

Le voisinage $V_j(t)$ est ensuite déterminé comme décrit précédemment en relation avec la Fig. 5.

Les messages $m_{i,j}^k(t, f) = g_j^k(o_i(t, f))$ reçus par le nœud $N_j$ sont pris en compte au moyen d'un mécanisme d'attention à plusieurs ($H$) têtes. Le message transmis par le nœud $N_j$ au nœud $N_i$ correspondant à la caractéristique $h \in \{1, ..., H\}$ est défini par :
[Math.11]

$$\mathbf{m}_{i,j}^h(t, f) = \left( \mathbf{k}_{i,j}^h, \mathbf{v}_{i,j}^h \right) \tag{11}$$

avec $k_{i,j}^h = W_{k,j}^h o_j^T$ et $k_{i,j}^h = W_{k,j}^h o_j^T$ en reprenant les notations précédentes. La cartographie locale augmentée $\Phi_j^a(t, f)$ est obtenue en fusionnant les cartographies locales, par les expressions (6) et (7). Les paramètres $\Theta$ paramétrisant la stratégie $\pi_{j,\Theta}\left( a_j(t) \big| \Phi_j^a(t, f) \right)$ sont choisis de manière à maximiser la récompense au cours du temps, par exemple maximiser les débits ou les niveaux de QoS des différentes communications, ou encore minimiser la fréquence de handover.

Le second exemple concerne le positionnement de points d'accès mobiles ou MAPs (*Mobile Access Points*) par exemple des points d'accès installés sur des drones ou UAVs (*Unmanned Aerial Vehicles*) dans un réseau 5G. De tels points d'accès mobiles permettent de déployer et reconfigurer rapidement un réseau, par exemple dans des situations d'urgence ou dans un théâtre d'opérations. La gestion de ressources radio dans un tel contexte, notamment le nombre de drones et leur positionnement, est particulièrement complexe en raison de la mobilité à la fois des UEs et des MAPs.

On suppose dans cet exemple que les MAPs opèrent dans la gamme de fréquence millimétrique et sont directement reliées au réseau dorsal (*backhaul network*). Le réseau comprend en outre $N_s$ stations de base MBS dans la bande sub-6 GHz. Pour simplifier, on considère une seule station de base MBS (une seule macrocellule) et une pluralité $N_m$ de point d'accès mobiles MAPs. Comme précédemment, on note $U(t)$ l'ensemble des terminaux utilisateurs, chaque terminal utilisateur est supposé de 2 antennes lui permettant d'établir soit une liaison avec un MAP soit une liaison avec une MBS. L'ensemble des points d'accès $S$ est de cardinal $N_m + 1$ ($N_m$ MAPs et une MBS), le nombre de MAPs étant choisi égal au nombre d'agrégats, $N_c(t)$, identifiés dans le réseau. Ces agrégats peuvent donc être désignés par $C_b(t)$, $b \in \{1, ..., N_c(t)\}$, chaque agrégat $b$ étant constitué d'équipements d'utilisateur $N_j$, $j \in C_b(t)$. Chaque point d'accès mobile $MAP_b$, peut prendre une décision $a_b(t) \in A$ où $A$ est l'ensemble des actions de déplacement possibles. Par exemple, cet ensemble peut être constitué de 6 déplacements incrémentaux (positifs et négatifs selon les 3 axes X,Y,Z) et d'un état stationnaire (pas de déplacement à l'instant $t$).

L'environnement d'un point d'accès mobile $MAP_b$ étant constitué des UEs $N_j$, $j \in C_b(t)$, chaque UE appartenant à l'agrégat $b$ transmet au nœud $MAP_b$ un message relatif à la caractéristique $h$ :
[Math.12]

$$\mathbf{m}_{j,b}^h(t, f) = \left( \mathbf{k}_{j,b}^h, \mathbf{v}_{j,b}^h \right) \tag{12}$$

où $k_{j,b}^h = W_{k,b}^h o_j^T$ et $v_{j,b}^h = W_{v,b}^h o_j^T$ sont respectivement les vecteurs clé et valeur relatifs au $MAP_b$. Le vecteur d'observation est $o_j$ est donné par $o_j(t, f) = \{x_j(t), y_j(t), R_j(t)\}$ où $(x_j(t), y_j(t))$ sont les coordonnées spatiales de l'UE $N_j$ et $R_j(t)$ est le débit perçu par cet UE.

Le point d'accès mobile $MAP_b$ agrège les messages reçus au moyen d'un mécanisme d'attention à plusieurs ($H$) têtes et génère, pour chaque caractéristique radio $h$, une cartographie locale $\Phi_b^h(t, f) = \left[ v_{j,b}^h, \forall j \in C_b(t) \right]^T$. Ces cartographies locales sont ensuite fusionnées au moyen d'un mécanisme d'attention, comme décrit en relation avec les expressions (6) et (7), à savoir :
[Math.13]

$$\mathbf{\Phi}_b^a(t,f) = \mathbf{W}_\Phi . \left[ \alpha_b^h \mathbf{\phi}_b^h (p,t,f); h = 1, ..., H \right]^T \qquad (13)$$

où $\alpha_b^h = \left( \alpha_{j,b}^h; \forall j \in C_b(t) \right)$ est le score entre la requête $q_b^h = W_{q,b}^h o_b^T$ du point d'accès mobile $MAP_b$, où $o_b$ désigne l'observation locale de $MAP_b$ (à savoir sa localisation 3D) et les vecteurs clé associés aux différentes observations issues des UEs de l'agrégat $b$ : [Math.14]

$$\alpha_{j,b}^h = \mathrm{softmax} \left( \frac{\mathbf{q}_b^h . \mathbf{k}_{j,b}^h}{\sqrt{n}} \right) \qquad (14)$$

où, comme précédemment, $n$ est la dimension de l'espace de représentation des caractéristiques radio. Ce score reflète la corrélation entre la dynamique du point d'accès mobile et celles des UEs appartenant à l'agrégat.

A partir de la cartographie augmentée $\Phi_b^a(t,f)$, le point d'accès mobile $MAP_b$ prend une décision $a_b(t) \in A$ au moyen de la stratégie $\pi_{b,\Theta}(a_b(t) | \Phi_b^a(t,f))$.

L'ensemble $\Theta$ des paramètres paramétrisant la distribution de probabilité $\pi_{b,\Theta}(a_b(t) | \Phi_b^a(t,f))$, ainsi que les paramètres de fusion, à savoir les matrices $W_{q,b}^h, W_{k,b}^h, W_{v,b}^h$, $W_\Phi$ sont appris au moyen d'un apprentissage par renforcement de bout en bout, visant à maximiser une récompense au cours du temps.

Comme dans l'exemple précédent, la maximisation de la récompense peut être exprimée comme une maximisation des débits ou des niveaux de QoS des différentes communications, ou encore une minimisation de la fréquence de handover.

## Revendications

1. Méthode de gestion de ressources radio dans un réseau cellulaire comprenant une pluralité de nœuds, dans laquelle pour chaque nœud d'intérêt du réseau, on détermine un voisinage de ce nœud d'intérêt, chaque nœud dudit voisinage effectuant une observation locale de son environnement et en extrayant une pluralité de caractéristiques radio, **caractérisée en ce que** :

   - chaque nœud dudit voisinage code chacune des caractéristiques radio sous la forme d'un message et transmet ce message au nœud d'intérêt ;
   - le nœud d'intérêt génère une cartographie locale de chaque caractéristique radio en agrégeant les messages codant cette caractéristique radio;
   - le nœud d'intérêt fusionne les cartographies locales au moyen de paramètres de fusion pour générer une cartographie locale hybride des différentes caractéristiques radio ;
   - le nœud d'intérêt décide en chaque instant d'effectuer une action parmi un ensemble fini d'actions possibles, à partir de ladite cartographie locale hybride et d'une stratégie de gestion de ressources radio définie par une distribution paramétrée de probabilité conditionnelle de chaque action, l'ensemble des paramètres de fusion ainsi que l'ensemble des paramètres de la distribution de probabilité conditionnelle faisant l'objet d'un apprentissage par renforcement de manière à maximiser une récompense au cours du temps, l'apprentissage dépendant d'une fonction-objectif du réseau.

2. Méthode de gestion de ressources radio dans un réseau cellulaire selon la revendication 1, **caractérisée en ce que** la récompense à maximiser correspond à une somme de débits ou de niveaux de qualité de service sur des communications du réseau à maximiser, ou bien une fréquence de handover ou une consommation énergétique à minimiser.

3. Méthode de gestion de ressources radio dans un réseau cellulaire selon la revendication 1 ou 2, **caractérisée en ce que** ledit voisinage du nœud d'intérêt est défini comme un ensemble de nœuds voisins du réseau au sens d'une métrique de similarité opérant dans un espace de représentation des observations locales.

4. Méthode de gestion de ressources radio dans un réseau cellulaire selon la revendication 1 ou 2, **caractérisée en ce que** ledit voisinage du nœud d'intérêt est déterminé au moyen d'un classificateur préalablement entraîné, opérant dans un espace de représentation des observations locales.

5. Méthode de gestion de ressources radio dans un réseau cellulaire selon l'une des revendications précédentes, **caractérisée en ce que** le nœud d'intérêt ne décide d'effectuer une action à un instant que dans la mesure où l'une des cartographies locales d'une caractéristique radio à cet instant diffère de la cartographie locale de la même caractéristique radio à l'instant précédent, la différence entre les deux cartographies locales étant mesurées à l'aide d'une divergence de Kullback-Leibler.

6. Méthode de gestion de ressources radio dans un réseau cellulaire selon l'une des revendications 1 à 4, **caractérisée en ce que** le nœud d'intérêt ne décide d'effectuer une action à un instant que dans la mesure où la cartographie locale hybride à cet instant diffère de la cartographie locale hybride à l'instant précédent, la différence entre les deux cartographies hybrides étant mesurée à l'aide d'une divergence de Kullback-Leibler.

7. Méthode de gestion de ressources radio dans un réseau cellulaire selon l'une des revendications précédentes, **caractérisée en ce que** la fusion des cartographies radio locales utilise un mécanisme d'attention à $H$ têtes, avec $H < K$ où $K$ est le nombre de caractéristiques radio.

8. Méthode de gestion de ressources radio dans un réseau cellulaire selon la revendication 7, **caractérisée en ce que** la cartographie locale hybride est obtenue au moyen de $$\Phi_j^a(t,f) = W_\Phi \left[ \alpha_j^h \phi_j^h(p,t,f); h = 1,\ldots,H \right]^T.$$

où $\alpha_j^h = \left( \alpha_{i,j}^h; i = 1,..,P_j \right)$ est le score entre une requête $q_j^h$ du nœud $N_j$ et des clés associées aux différentes observations issues des nœuds du voisinage $V_j(t)$, du nœud d'intérêt, $\phi_j^h(p,t,f)$ est la valeur de cartographie locale de la caractéristique $h$ au point $p$, à l'instant $t$ et à la fréquence $f$, et $W_\Phi$, est une matrice de taille $P_j \times H$ où $P_j$ est le nombre de nœuds du voisinage $V_j(t)$.

9. Méthode de gestion de ressources radio dans un réseau cellulaire selon la revendication 8, **caractérisée en ce que** la requête du nœud d'intérêt est exprimée par un vecteur $q_j^h = W_{q,j}^h o_j^T$ où $W_{q,j}^h$ est une matrice de taille $n \times \Omega$ où $n$ est la dimension de l'espace de représentation des caractéristiques et $\Omega$ est la taille des vecteurs d'observation et que les clés associés aux différentes observations issues des nœuds $N_i$ de $V_j(t)$ sont exprimées par les vecteurs $$k_{i,j}^h = W_{k,j}^h o_j^T.$$

10. Méthode de gestion de ressources radio dans un réseau cellulaire selon la revendication 9, **caractérisée en ce que** le score entre la requête $q_j^h$ du nœud $N_j$ et une clé associée à un nœud $N_i$ du voisinage $V_j(t)$ est calculé au moyen de $$\alpha_{i,j}^h = softmax\left( \frac{q_j^h . k_{i,j}^h}{\sqrt{n}} \right)$$ où « . » représente le produit scalaire.

**Patentansprüche**

1. Verfahren zur Verwaltung von Funkressourcen in einem zellulären Netzwerk, das eine Vielzahl von Knoten umfasst, wobei für jeden Knoten von Interesse des Netzwerkes eine Nachbarschaft dieses Knotens von Interesse bestimmt wird, wobei jeder Knoten der Nachbarschaft eine lokale Beobachtung seiner Umgebung durchführt und eine Vielzahl von Funkmerkmalen extrahiert, **dadurch gekennzeichnet, dass**:

- jeder Knoten der Nachbarschaft jedes der Funkmerkmale in Form einer Nachricht codiert und dies Nachricht an den betreffenden Knoten überträgt;
- der Knoten von Interesse eine lokale Kartierung jedes Funkmerkmals durch Aggregation der Meldungen erzeugt, die dieses Funkmerkmal kodieren;
- der Knoten von Interesse die lokalen Kartierungen mithilfe von Fusionsparametern fusioniert, um eine hybride lokale Kartierung der verschiedenen Funkmerkmale zu erzeugen;
- der Knoten von Interesse zu jedem Zeitpunkt entscheidet, eine Aktion aus einer endlichen Reihe möglicher Aktionen auszuführen, basierend auf der genannten hybriden lokalen Kartierung und einer Strategie zur Verwaltung von Funkressourcen, die durch eine parametrisierte bedingte Wahrscheinlichkeitsverteilung jeder Aktion definiert ist, alle Fusionsparameter sowie alle Parameter der bedingten Wahrscheinlichkeitsverteilung, die durch Verstärkung gelernt werden, um eine Belohnung im Laufe der Zeit zu maximieren, wobei das Lernen von einer Zielfunktion des Netzes abhängt.

2. Verfahren zur Verwaltung von Funkressourcen in einem zellulären Netzwerk nach Anspruch 1, **dadurch gekennzeichnet, dass** die zu maximierende Belohnung einer Summe von zu maximierenden Übertragungsraten oder Servicequalitätsniveaus auf Netzwerkkommunikationen oder einer zu minimierenden Übergabefrequenz oder einem zu minimierenden Energieverbrauch entspricht.

3. Verfahren zur Verwaltung von Funkressourcen in einem zellulären Netzwerk nach Anspruch 1 oder 2, **dadurch gekennzeichnet, dass** die Nachbarschaft des Knotens von Interesse als eine Gruppe von Knoten definiert ist, die im Sinne einer Ähnlichkeitsmetrik, die in einem Raum zur Darstellung lokaler Beobachtungen operiert, dem Netzwerk benachbart sind.

4. Verfahren zur Verwaltung von Funkressourcen in einem zellulären Netzwerk nach Anspruch 1 oder 2, **dadurch gekennzeichnet, dass** die Nachbarschaft des Knotens von Interesse mittels eines zuvor trainierten Klassifikators bestimmt wird, der in einem Raum arbeitet, in dem lokale Beobachtungen dargestellt werden.

5. Verfahren zur Verwaltung von Funkressourcen in einem zellulären Netzwerk nach einem der vorhergehenden Ansprüche, **dadurch gekennzeichnet, dass** der Knoten von Interesse nur dann entscheidet, eine Aktion zu einem bestimmten Zeitpunkt durchzuführen, wenn eine der lokalen Kartierungen eines Funkmerkmals zu diesem Zeitpunkt von der lokalen Kartierung desselben Funkmerkmals zum vorherigen Zeitpunkt abweicht, wobei die Differenz zwischen den beiden lokalen Kartierungen mithilfe einer Kullback-Leibler-Divergenz gemessen wird.

6. Verfahren zur Verwaltung von Funkressourcen in einem zellulären Netzwerk nach einem der Ansprüche 1 bis 4, **dadurch gekennzeichnet, dass** der Knoten von Interesse nur dann entscheidet, eine Aktion zu einem bestimmten Zeitpunkt durchzuführen, wenn sich die zu diesem Zeitpunkt vorliegende hybride lokale Kartierung von der zu einem früheren Zeitpunkt vorhandenen hybriden lokalen Kartierung unterscheidet, wobei die Differenz zwischen den beiden hybriden Kartierungen mithilfe einer Kullback-Leibler-Divergenz gemessen wird.

7. Verfahren zur Verwaltung von Funkressourcen in einem zellulären Netzwerk nach einem der vorhergehenden Ansprüche, **dadurch gekennzeichnet, dass** die Fusion der lokalen Funkkartierungen einen Aufmerksamkeits-Kopf-Mechanismus $H$ mit $H < K$ verwendet, wobei $K$ die Anzahl der Funkmerkmale ist.

8. Verfahren zur Verwaltung von Funkressourcen in einem zellulären Netzwerk nach Anspruch 7, **dadurch gekennzeichnet, dass** die hybride lokale Kartierung anhand $\boldsymbol{\Phi}_j^a(t,f) = \boldsymbol{W}_\Phi \cdot \left[\alpha_j^h \phi_j^h(p,t,f); h = 1, \ldots, H\right]^T$

erhalten wird, wobei $\boldsymbol{\alpha}_j^h = \left(\alpha_{i,j}^h; i = 1,..,P_j\right)$ der Wert zwischen einer Abfrage $\boldsymbol{q}_j^h$ des Knotens und $N_j$ den Schlüsseln, die mit den verschiedenen Beobachtungen aus den Knoten der Nachbarschaft $V_j(t)$, des Knotens von Interesse, $\phi_j^h(p,t,f)$ der lokale Mapping-Wert des Merkmals $h$ an Punkt $p$ ist, zum Zeitpunkt $t$ und bei der Frequenz $f$, und $\boldsymbol{W}_\Phi$ eine Matrix der Größe $P_j \times H$ ist, wobei $P_j$ die Anzahl der Knoten in der Nachbarschaft $V_j(t)$ ist.

9. Verfahren zur Verwaltung von Funkressourcen in einem zellulären Netzwerk nach Anspruch 8, **dadurch gekennzeichnet, dass** die Abfrage des Knotens von Interesse durch einen Vektor ausgedrückt wird, bei $\boldsymbol{q}_j^h = \boldsymbol{W}_{q,j}^h \boldsymbol{o}_j^T$

dem $W_{q,j}^h$ eine Matrix der Größe $n \times \Omega$ ist, bei der $n$ die Größe des Raums für die Darstellung der Merkmale und $\Omega$ die Größe der Beobachtungsvektoren ist und dass die Schlüssel für die verschiedenen Beobachtungen aus den Knoten $N_i$ von $V_j(t)$ durch die Vektoren $k_{i,j}^h = W_{k,j}^h o_j^T$ ausgedrückt werden .

10. Verfahren zur Verwaltung von Funkressourcen in einem zellulären Netzwerk nach Anspruch 9, **dadurch gekennzeichnet, dass** der Wert zwischen der Abfrage $q_j^h$ des Knotens $N_j$ und einem mit einem Knoten $N_i$ der Nachbarschaft verbundenen Schlüssel $V_j(t)$ anhand $\alpha_{i,j}^h = softmax\left(\frac{q_j^h.k_{i,j}^h}{\sqrt{n}}\right)$ berechnet wird, wobei " . " das skalare Produkt darstellt.

## Claims

1. Method for managing radio resources in a cellular network comprising a plurality of nodes, wherein for each node of interest of the network, a neighbourhood of this node of interest is determined, each node of said neighbourhood performing a local observation of its environment and by extracting a plurality of radio characteristics, **characterised in that**:

   - each node of said neighbourhood encodes each of the radio characteristics in the form of a message and transmits this message to the node of interest;
   - the node of interest generates a local mapping of each radio characteristic by aggregating the messages encoding this radio characteristic;
   - the node of interest merges the local mappings using fusion parameters to generate a hybrid local mapping of the different radio characteristics;
   - the node of interest decides at each time to perform an action from a finite set of possible actions, based on said hybrid local mapping and on a radio resource management strategy defined by a conditional probability parameterised distribution of each action, the set of fusion parameters as well as the set of parameters of the conditional probability distribution being subject to reinforcement learning in order to maximise a reward over time, the learning being dependent on a function-objective of the network.

2. Method for managing radio resources in a cellular network according to claim 1, **characterised in that** the reward to be maximised corresponds to a sum of bitrates or service quality levels on network communications to be maximised, or a handover frequency or energy consumption to be minimised.

3. Method for managing radio resources in a cellular network according to claim 1 or 2, **characterised in that** said neighbourhood of the node of interest is defined as a set of neighbouring nodes of the network, considering a similarity metric operating in a representation space of the local observations.

4. Method for managing radio resources in a cellular network according to claim 1 or 2, **characterised in that** said neighbourhood of the node of interest is determined by means of a previously trained classifier, operating in a representation space of the local observations.

5. Method for managing radio resources in a cellular network according to any one of the preceding claims, **characterised in that** the node of interest only decides to perform an action at a time if one of the local mappings of a radio characteristic at that time differs from the local mapping of the same radio characteristic at the previous time, the difference between the two local mappings being measured using a Kullback-Leibler divergence.

6. Method for managing radio resources in a cellular network according to one of claims 1 to 4, **characterised in that** the node of interest only decides to perform an action at a time if the hybrid local mapping at that time differs from the hybrid local mapping at the previous time, the difference between the two hybrid mappings being measured using a Kullback-Leibler divergence.

7. Method for managing radio resources in a cellular network according to any one of the preceding claims, **characterised in that** the fusion of local radio mappings uses an attention mechanism with $H$ heads, with $H < K$, where $K$ is the number of radio characteristics.

8. Method for managing radio resources in a cellular network according to claim 7, **characterised in that** hybrid local mapping is obtained by means of $\Phi_j^a(t,f) = W_{\Phi}. \left[\alpha_j^h \phi_j^h(p,t,f); h = 1,\ldots,H\right]^T$ , where $\alpha_j^h = \left(\alpha_{i,j}^h; i = 1,\ldots,P_j\right)$ is the score between a query $q_j^h$ from the node $N_j$ and keys associated with the different observations from the nodes from the neighbourhood $V_j(t)$, the node of interest, $\phi_j^h(p,t,f)$ is the local mapping value of the characteristic $h$ at point p, at time $t$ and at frequency $f$, and $W_{\Phi}$ is a matrix of size $P_j \times H$, where $P_j$ is the number of nodes in the neighbourhood $V_j(t)$.

9. Method for managing radio resources in a cellular network according to claim 8, **characterised in that** the query of the node of interest is expressed by a vector $q_j^h = W_{q,j}^h o_j^T$ , where $W_{q,j}^h$ is a matrix of size $n \times \Omega$, where $n$ is the dimension of the characteristic representation space and $\Omega$ is the size of the observation vectors and that the keys associated with the different observations from the nodes $N_i$ of $V_j(t)$ are expressed by the vectors $k_{i,j}^h = W_{k,j}^h o_j^T$ .

10. Method for managing radio resources in a cellular network according to claim 9, **characterised in that** the score between the query $q_j^h$ from the node $N_j$ and a key associated with a node $N_i$ from the neighbourhood $V_j(t)$ is calculated by means of $\alpha_{i,j}^h = softmax\left(\frac{q_j^h.k_{i,j}^h}{\sqrt{n}}\right)$ where "." represents the scalar product.

FIG. 1

$$\Phi_j^{(k)} = h\left(\left\{\phi_j^{(k)}\right\}_k\right) = \sum_k \alpha_j^{(k)} \phi_j^{(k)}(p,t,f)$$

FIG. 2

FIG. 3

FIG. 4

```
              ┌─────────────────┐
              │      nœud       │
              │      N_j        │
              └─────────────────┘
                       │
                       ▼
        ┌───────────────────────────┐
        │   collection des messages  │        510
        │       des nœuds de U       │
        └───────────────────────────┘
                       │
                       ▼
        ┌───────────────────────────┐
        │   normalisation des vecteurs│       520
        │        d'observation       │
        └───────────────────────────┘
                       │
                       ▼
        ┌───────────────────────────┐
        │   projection dans un espace │       530
        │      de représentation     │
        └───────────────────────────┘
                       │
                       ▼
        ┌───────────────────────────┐
        │        clustering          │        540
        └───────────────────────────┘
                       │
                       ▼
        ┌───────────────────────────┐
        │    labellisation par agrégat│       550
        └───────────────────────────┘
                       │
                       ▼
        ┌───────────────────────────┐
        │   entrainement hors ligne   │       560
        │      du classificateur      │
        └───────────────────────────┘
```

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019211134 A1
- WO 2020068127 A1
- WO 2012072445 A1

**Littérature non-brevet citée dans la description**

- **J. CHEN INTITULÉ**. Learning radio maps UAV-aided wireless networks : a segmented regression approach. *Proc. of IEEE Int'l Conf. on Communications*, May 2017, 1-6
- **S. BI et al.** intitulé « Engineering radio map for wireless resource management. *IEEE Wireless Communications*, February 2019
- **C. STUDER et al.** intitulé « Channel charting : locating users within the radio environment using channel state information. *IEEE Access*, 2016, vol. 4, 1-17
- **A. VASWANI et al.** Attention is all you need. *Proceedings of NIPS 2017*, 06 December 2017
- **J. ZHOU et al.** Graph neural networks : a review of methods and applications. *AI Open*, vol. 1, 57-81